# EUROPEAN PATENT SPECIFICATION

(11) **EP 4 493 332 B1**
(45) Date of publication and mention of the grant of the patent: **06.05.2026**
(21) Application number: 23712110.8
(22) Date of filing: 14.03.2023
(51) Int. Cl.: B07C 5/36, B25J 9/00, G05B 19/418

(54) **SYSTEM AND METHOD FOR THE PROCESSING OF PRODUCTS**
SYSTEM UND VERFAHREN ZUM BEARBEITEN VON PRODUCTEN
SYSTÈME ET PROCÉDÉ DE TRAITEMENT DES PRODUITS

(30) Priority: 16.03.2022 NL 2031301
(43) Date of publication of application: 22.01.2025
(73) Proprietor: Vanderlande Industries B.V., 5466 RB Veghel (NL)
(72) Inventor: VAN BOXTEL, Johannes Martinus Maria, 5466 RB Veghel (NL); TAAMS, Hugo Laurens Jan, 5466 RB Veghel (NL); DE LOOIJER, Stijn Olaf Hendrik, 5466 RB Veghel (NL); STEIJAERT, Hans Alphonsius Maria, 5466 RB Veghel (NL)
(74) Representative: Algemeen Octrooi- en Merkenbureau B.V.
(86) International application number: PCT/NL2023/050125
(87) International publication number: WO 2023/177287

(56) References cited:
- WO-A1-2021/198053

## Description

The present invention relates to a system and a method for processing products. The products preferably relate to parcels. In systems to which the invention relates, products typically arrive in bulk and leave the system in such a way that the products are easier to sort. That is, a relatively unstructured stream of products is then converted into a more structured, more "singulated" stream of products such as for the purpose of said sorting.

US 10,646,898 B2 and US 10,994,309 B2 relate to a system and method for identifying and transferring products from a first to a second conveyor.

WO 2021/198053 A1 discloses a robot system for picking randomly shaped and sized objects from a continuously moving stream of objects in bulk. Singulated objects are placed and aligned on an induction or directly on a sorter.

One aim of the invention is to provide an improved system and improved method for the processing of products. One aim of the invention is to provide an efficient system and method for the structured transfer of a stream of products supplied in bulk from a bulk supply conveyor to a discharge conveyor. One aim of the invention is to provide a system and method for processing products supplied in bulk with a low error sensitivity.

One or more of said aims are achieved with the system according to the present invention, as defined in claim 1, and/or with the method according to the invention as defined in claim 13.

The invention provides a system for the processing of products, comprising
- a bulk supply conveyor for supplying products;
- a discharge conveyor for the discharging of products;
- a transfer robot arranged for transferring products from the bulk supply conveyor to the discharge conveyor;
- a controller arranged for selecting, on the basis of predetermined selection criteria, a product that is to be transferred, from products that are fed with the bulk supply conveyor to the transfer robot, and for controlling the transfer robot, on the basis of the selection, for the purpose of transferring, by the transfer robot, the product that is to be transferred;
- a transfer station for the manual transfer there, to the discharge conveyor, of products that have not been transferred by the transfer robot,

wherein the transfer station is provided in the system in such a way that products that have not been transferred by the transfer robot end up at the transfer station;
wherein the system comprises several such transfer robots, which are provided successively, seen in a transport direction of the bulk supply conveyor, and wherein the bulk supply conveyor comprises a main conveyor with several branches, wherein each branch ends up at one of the several transfer robots,
wherein the system comprises a respective branch device associated with each branch, which is arranged for causing products to move across from the main conveyor to the respective branch,
the system further comprising a branch controller arranged for controlling the respective branch devices in such a way that products move across from the main conveyor to the branches for supplying said products to the transfer robots via the branches.

The invention also provides a method for processing products, the method comprising
a) the supplying of products with a bulk supply conveyor;
b) in each case, transferring a product with a transfer robot from the bulk supply conveyor to a discharge conveyor, for which:
   b1) with a controller, on the basis of predetermined selection criteria, a product to be transferred is selected from products that are fed with the bulk supply conveyor to the transfer robot, and
   b2) with the controller, the transfer robot is controlled in such a way that the transfer robot transfers the product that is to be transferred, from the bulk supply conveyor to the discharge conveyor;
c) the conveying, to a transfer station, of products supplied with the bulk supply conveyor, which have not been transferred according to step b); and
d) manual processing, at the transfer station, of the products that had not been transferred, wherein:
   d1) it is determined whether a product should be transferred to the discharge conveyor, and
   d1a) if so, the product is transferred to the discharge conveyor, and
   d1b) if not, the product is led away from the transfer station to a residual discharge system.

One effect of the system and of the method according to the invention is that by the selected transfer of products with a transfer robot to the discharge conveyor and manual transfer at a transfer station, i.e. by a person, to the discharge conveyor, of products that have not been transferred by the transfer robot, very efficient structured processing of products, such as parcels, is possible. Products such as parcels are characterized by a great variety of dimensions, shape, material and weight. With the system and the method according to the invention, a supplied stream of unstructured products, i.e. a bulk supply of products wherein products are typically located disorderly on and next to one another, are converted efficiently and reliably, i.e. with a low error sensitivity, into the structured, more singulated discharge of the products with the discharge conveyor, after which the products may be further processed, such as sorted. In the system according to the invention, the requirements on the transfer robot may be relatively low, since products that for example cannot be transferred safely, or sufficiently safely, with the transfer robot, may then be transferred manually.

The products preferably relate to parcels. These include for example cardboard boxes, envelopes such as express envelopes, plastic-wrapped packages, etc., in practice also called (express) parcels.

In one embodiment, the method according to the invention is carried out using a system according to the invention.

As is clear from the foregoing, the controller has a communication link to the transfer robot.

In one embodiment, the discharge conveyor comprises a sorting conveyor, preferably a cross belt sorter.

According to the invention, the system has several such transfer robots, which are provided successively, seen in a transport direction of the bulk supply conveyor. Step b) of the method is carried out with each of the several transfer robots. In this embodiment, the advantages of the system and the method according to the invention come emphatically to the fore since the single transfer station, where in one embodiment products can be transferred manually, is then provided downstream with the several transfer robots. As a result, the number of products that end up at the transfer station is greater, so that the transfer station can be used more effectively.

The bulk supply conveyor comprises, according to the invention, a main conveyor with several branches, wherein each branch ends up at one of the several transfer robots. In this way it is for example possible to distribute the stream of products on the main conveyor over several of the transfer robots.

According to the invention, the system comprises a respective branch device associated with each branch, which is arranged for causing products to move across from the main conveyor to the respective branch. In this case the system further comprises a branch controller, with a communication link to the branch devices, configured to control the respective branch devices in such a way that products move across from the main conveyor to the branches for supplying said products to the transfer robots via the branches. The branch devices may be for example beam-shaped elements extending, at least in an active state thereof, obliquely over the main conveyor, so that as it were a blockade is formed temporarily so that products are propelled sideways, guided by the obliquely directed element, from the main conveyor onto the branch conveyor. Alternatively the branch devices may for example be formed by openable and closable passages, such as hatches, in a vertical side wall of a conveyor installed obliquely, said side wall inclined in the transverse direction and in the downward direction.

It is advantageous if each of the several transfer robots has an associated said controller. This makes the respective transfer robots to a great extent independent of, in particular, transfer robots provided upstream and the possible influence thereof on the position of one or more products on the bulk supply conveyor.

In one embodiment, the several transfer robots are installed along the bulk supply conveyor in such a way that these products are transferred from a stream of products on the bulk supply conveyor, wherein the bulk supply conveyor ends up at the transfer station downstream of the several transfer robots. That is, the stream of products, according to the method, after execution of step a), goes past all the transfer robots, wherein successive transfer robots, according to step b), in each case transfer products from said stream of products to the discharge conveyor. Products that have not been transferred by the transfer robot, or in the case of several transfer robots not by any of the transfer robots, therefore finally end up at the transfer station where these can be transferred, according to step d) of the method. In this case it is also possible to allow a proportion of the products to go past all the transfer robots intentionally, i.e. intentionally not to select them, in order to utilize the available capacity at the location of the transfer station, i.e. of the individual, as fully as possible.

In one embodiment, the main conveyor ends up at the transfer station downstream of the branches. Products that are not led onto a branch then end up at the transfer station where these products can be transferred manually to the discharge conveyor. In this case it is also possible to let a proportion of the products go past all branches on the main conveyor in order to utilize the available capacity at the location of the transfer station, i.e. of the individual, as fully as possible.

In one embodiment of the method, step b) is thus carried out for a proportion of the products, wherein the remainder of the products are sent directly to the transfer station. In this case said proportion of the products for which step b) is carried out is preferably between 70 and 95 percent of the products supplied, more preferably 80 to 90 percent of the products supplied.

It is advantageous if the system has a separate transfer robot for each of the several branches. Thus, each branch is then served by a separate associated transfer robot, which transfers products from the respective branch to the discharge conveyor. In an alternative embodiment, more than one branch is assigned to one and the same transfer robot. In this case one transfer robot may for example serve two successive branches, and said transfer robot can be installed between them.

In one embodiment, the branch comprises a branch conveyor with a branch drive for driving the branch conveyor in such a way that products are transported from the main conveyor to the transfer robot. In this case it is advantageous if the controller is also arranged in each case for controlling the branch drive, during a transfer operation of the transfer robot, and thus has a communication link to it, in such a way that the branch conveyor, or at least a portion of the branch conveyor situated at the location of the transfer robot, is stopped temporarily. In this case, in operation it is possible to supply products to the transfer robot and at the respective location at the transfer robot, to stop products on the branch so that the transfer robot can in each case transfer a product that is at a fixed location. Alternatively, the products may be moved along the transfer robot, wherein for example it is conceivable to set a speed of movement of products of the products on the branch, or for example on a downstream part thereof at the location of the transfer robot, that is lower than a speed of products on the main conveyor.

In one embodiment, the system further comprises an auxiliary conveyor arranged for conveying products to the transfer station. In one embodiment, in this case the controller is also arranged for controlling the branch drive in such a way that products that have not been transferred by the transfer robot move across from the branch conveyor to the auxiliary conveyor. In this way, the feed of products to the transfer robot or robots, and the conveying of products away from the transfer robot(s) to the transfer station, may thus take place independently. In this case, for example a different transport speed and/or a different type of conveyor may be considered.

In one embodiment, the system comprises a camera for detecting products on the bulk supply conveyor, wherein the controller is arranged for selecting a product to be transferred, using information about a product on the bulk supply conveyor detected with the camera. The controller then also has a communication link to the camera. In an embodiment of the system with several transfer robots, a separate such camera may be provided per transfer robot. In an embodiment of the system comprising branches, a separate such camera may be provided per branch. The controller then also has a communication link to the camera. The camera is preferably provided in such a way that it detects these products at the location of the transfer robot. The observed information may comprise information relating to a shape of a product, dimensions of a product, a relative position of a product with respect to surrounding products such as whether the product lies partly under or on top of a surrounding product, and/or a position of a product on the bulk supply conveyor.

In one embodiment of the method, wherein if during step b2), gripping of the product with the transfer robot for the purpose of transferring the product is not successful, step b2) is repeated at least once and at most three times, and if during a said repetition of step b2), gripping of the product with the transfer robot for the purpose of transferring the product is also unsuccessful, during a subsequent step b1) this product is excluded from selection by the controller at least up to and including execution of step c). This makes the transfer of products more efficient since a transfer robot may only make a very limited number of attempts to transfer a product, after which the product is left out of further transfer operations and so ends up at the collecting station, where it can be transferred manually just as efficiently. When using several transfer robots that transfer products from one and the same stream of products, i.e. not from branches, it is moreover possible also to exclude such a product from selection for the purpose of transfer by optional transfer robots provided downstream. Said repetition of a transfer attempt by the transfer robot may for example take place at a lower speed so as to reduce the risk of failure for that specific product.

In one embodiment, the system further comprises a further camera for detecting a product on the discharge conveyor at the location of the transfer robot. In one embodiment, the system also comprises a removing device for removing a product from the discharge conveyor at the location of the transfer robot. In this case, in one embodiment the system comprises a remover-controller, with a communication link to the removing device, arranged to drive the removing device in such a way that a product on the discharge conveyor is removed from the discharge conveyor at the location of the transfer robot if it is determined with the detection system that the product does not satisfy predetermined criteria relating to an orientation of the product and/or to the position of the product on the discharge conveyor and/or that the product forms part of several products that are transferred by the transfer robot unintentionally in a single transfer operation. In one embodiment, the criteria stipulate that only one separate product may be transferred to the discharge conveyor per transfer operation. Thus, if for example two products are transferred with the transfer robot unintentionally at the same time in one transfer operation, these two products are both removed from the discharge conveyor and preferably led to the transfer station, as described below. In another situation it may be that after transfer, a product does not satisfy requirements regarding a desired orientation and/or a desired position of the product on the discharge conveyor, for which reason it cannot be guaranteed that the product in question can be transported further by the discharge conveyor in the correct way. For example, a product may not be located at a desired position if the product is located partly outside a desired transfer region on the discharge conveyor. Said risk may arise in particular if the product is thrown onto the discharge conveyor, as will be discussed further hereunder.

In one embodiment, wherein the bulk supply conveyor discharges at the transfer station downstream of the transfer robot(s), the remover-controller is arranged in one embodiment thereof to drive the removing device in such a way that a product on the discharge conveyor at the location of the transfer robot goes back across from the discharge conveyor to the bulk supply conveyor.

In an embodiment of the system comprising the auxiliary conveyor, the remover-controller is arranged in one embodiment thereof to drive the removing device in such a way that a product on the discharge conveyor at the location of the transfer robot goes across from the discharge conveyor to the auxiliary conveyor.

In one embodiment, the discharge conveyor comprises an infeed, wherein the transfer robot is arranged for transferring products from the bulk supply conveyor to the infeed of the discharge conveyor. The infeed then discharges onto a main conveyor of the discharge conveyor, for example such as a cross belt sorter.

The removing device for removing a product from the discharge conveyor at the location of the transfer robot comprises in one embodiment an upstream conveyor belt section of the infeed, said conveyor belt section for the purpose of removing a product from the infeed being driven backwards so that a product goes back from the infeed onto the bulk supply conveyor downstream of the transfer robot, or ends up on the auxiliary conveyor and thus goes to the transfer station. Alternatively, the removing device may for example relate to a pushing member for pushing a product from the discharge conveyor, or from an infeed thereof, or may for example be a tilting member for causing at least one section of the discharge conveyor or an infeed thereof to tilt, for thus removing a product from the discharge conveyor by gravity.

Products may thus arrive at the transfer station that do not meet the selection criteria of the controllers of the transfer robots. Furthermore, in some embodiments of the invention products may arrive at the transfer station that are intentionally not selected for the purpose of transfer by a transfer robot (so as to utilize the available capacity at the transfer station to a greater extent, as described), and/or products wherein transfer has not been successful, and/or products which, after transfer, are removed from the discharge conveyor again and are led to the transfer station.

In one embodiment, the discharge conveyor further comprises a recording device with a readout device at the location of the infeed arranged for recording information from a product on the infeed, wherein the readout device is preferably arranged for optical readout of an optically readable code on the product. Said information may be used during further processing of the product, for example such as for the purpose of sorting the product downstream of the device.

In one embodiment, the readout device is arranged for readout from the bottom upwards of an underside of a product on the infeed, and wherein the recording device also comprises a further readout device that is provided downstream of the infeed along the discharge conveyor for readout of one or more sides of the product facing upwards or sideways. A readout device of this kind may be provided in a simple manner at the location of the infeed such as between two successive conveyor belt sections of the infeed. In one embodiment the discharge conveyor relates to a conveyor wherein product-carrying units are transported in a transport direction, wherein the product-carrying units carry one or more products, preferably one. The discharge conveyor may for example comprise a cross belt sorter or tilt tray sorter or shoe sorter. With conveyors of this kind, provision of said readout device that is effective from the bottom is relatively difficult, but provision of said further readout device, generally as a portal passing over the conveyor, is relatively simple. In this way, information may thus be read from products particularly efficiently, wherein it is irrelevant how exactly the product is placed on the discharge conveyor during a transfer operation. The further readout device is preferably arranged for readout of said optically readable code on all sides of the product except an underside.

For the stated reasons it is particularly advantageous if, in the case of a system with said several branches and several transfer robots, for each of the several transfer robots the discharge conveyor has a separate such infeed, wherein each infeed has a readout device of this kind and wherein said further readout device is provided downstream of said infeeds along the discharge conveyor.

This last-mentioned embodiment is also advantageously usable for a transport system comprising a conveyor comprising a main conveyor and several infeeds, which are each connected to the main conveyor. We may then be said to have a transport system for recording information from products on a conveyor, the transport system comprising a main conveyor and several infeeds, each connected to the main conveyor, wherein in operation products are transferred via the infeeds to the main conveyor, the transport system further comprising a recording device with, at the location of each of the several infeeds, a readout device arranged for recording information from a product on the respective infeed, wherein the readout device is arranged for optical readout of an optically readable code on the product. Said information may be used during further processing of the product, for example such as for the purpose of sorting the product downstream of the device, such as with the main conveyor, which for example may be configured as a cross belt sorter. In this case the readout device is arranged for readout from the bottom upwards of an underside of a product on the infeed. The recording device also comprises a further readout device that is provided downstream of the several infeeds along the main conveyor for readout of one or more sides of the product facing upwards or sideways, preferably configured as a portal passing over the conveyor. In this way, information may thus be read from products particularly efficiently, wherein it is irrelevant how exactly the product ends up on the infeed. The further readout device is preferably arranged for being able to read said optically readable code on all sides of the product except an underside.

In the manual processing according to step d) a person determines, at the location of the transfer station, independently or using equipment such as a camera, whether a product should be transferred to the discharge conveyor, according to step d1). If so, the person may transfer the product to the discharge conveyor according to step d1a). If not, the person may discharge the product along another path to the residual discharge system, such as for example by depositing the product in a collecting bin, wherein at a certain time point the bin is brought to the residual location.

The residual discharge system may for example comprise a collecting bin or container, which is placed next to the transfer station, and in which products may be deposited. The residual discharge system may for example comprise a residual discharge conveyor, obviously being a different conveyor than the discharge conveyor, on which products may be placed.

In one embodiment, at least one of the several transfer robots, preferably each transfer robot, is arranged for being able to throw products onto a discharge conveyor, preferably onto an infeed thereof. For the purpose of being able to throw, in one embodiment each respective transfer robot may be provided with at least one suction cup for being able to grip the product on the top of a product and/or each respective transfer robot is of the six-axis type. During the throwing of products, the respective products will sail through the air along a path that has a horizontal component. Thus, the transfer robot does not need to reach completely to the discharge conveyor, so that the transfer robot can transfer, i.e. can move to the discharge conveyor, products relatively quickly one after another. This embodiment does not exclude that the transfer robot could also be suitable for being able to place products on a discharge conveyor. The path that a product travels through the air during throwing will at least depend on the weight, dimensions, shape and/or volume. The choice between throwing or placing may for example be made by a control system of the transfer robot based on these parameters or at least one of them. For example, relatively light products, for example less than 100 g, or relatively heavy products, for example more than 5 kg, may be excluded by the control system for being thrown, because these have an increased risk of not ending up at the intended destination location, or may load the infeed too heavily by the fall. The weight of a product can be determined after the product in question has been taken up by a respective transfer robot. For this purpose the transfer robot could be configured with weighing sensors. Alternatively, the weight could already have been determined at an earlier time, wherein this weight is coupled to a unique identification code that is provided on the product, for example in the form of a bar code or a QR code. This code can be read automatically with appropriate means that are known per se, such as a camera, directly before, during or directly after a product is taken up by the transfer robot and the respective data can be communicated to the control system. Data relating to dimensions, shape and/or volume could be made available to the control system in a comparable manner as defined above for weight, if necessary supported therein by a camera system or the like, which is provided stationary in the vicinity of the transfer robot or for example forms part of the gripping tool with which the transfer robot is provided in order to be able to grip the product. The aforementioned parameters or at least one of them will also be decisive for determining at what moment, in what position, with what speed and/or in which direction a product must be released by the respective transfer robot. The throwing of products may be directed at ensuring that each product comes to rest within a certain, for example rectangular, intended region on the discharge conveyor. If it were to be established that the product has not come to rest within that intended region, it may be selected, for example with manipulators provided for this purpose, to position the product within that intended region so that further transport by the discharge conveyor may take place reliably. Alternatively, it could also be selected for the respective product still to be conveyed to the transfer station, for example by temporarily reversing the normal transport direction of the discharge conveyor so that the product for example ends up on an auxiliary conveyor, as already described in the foregoing. The orientation that a product has after it comes to rest in an intended region can also be taken into account by the control system to let the product either be conveyed further by the discharge conveyor, or not to let that happen and for example to let the product be conveyed to the transfer station, for example via an auxiliary conveyor.

The present invention will be explained hereunder on the basis of the description of embodiment examples of a system and method according to the invention, referring to the following schematic figures, wherein:
Fig. 1 shows in top view the principle of an example of a system according to the invention, and
Fig. 2 shows in top view the principle of a further embodiment example of a system according to the invention.

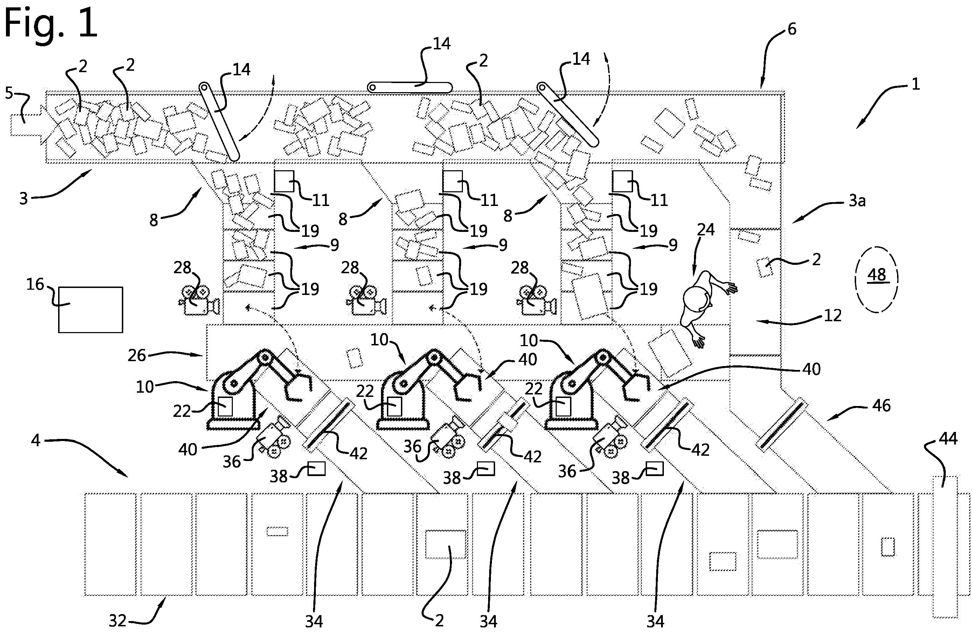

Fig. 1 shows a system 1 as an example of a system according to the invention for the processing of products 2. At least in the present example, the products are parcels. Fig. 1 shows a large amount of products 2, only some of which are provided with a reference number, for clarity. The system 1 has a bulk supply conveyor 3 for the bulk, and thus disorderly, supply of the products 2 and a discharge conveyor 4 for the discharging of products 2. The bulk supply conveyor 3 is a belt conveyor, whereas the discharge conveyor is a cross belt sorter. The arrow 5 indicates the transport direction of the stream of products 2 supplied with the bulk supply conveyor 3.

The bulk supply conveyor 3 has a main conveyor 6 with three branches 8. The system 1 also has three transfer robots 10, which are installed successively, seen in the transport direction 5 of the bulk supply conveyor 3, each being arranged for transferring products 2 from a branch 8, which discharges at the respective transfer robot 10, from the bulk supply conveyor 3 to the discharge conveyor 4. Each branch 8 has a branch conveyor 9 with a branch drive 11 for driving the branch conveyor 9 in such a way that products 2 arriving from the main conveyor 6 are transported via the branch to the transfer robot 10. The branches 8 provide distribution of the stream of products 2 over the transfer robots 10. Fig. 1 shows, downstream of the most downstream transfer robot 10, being the transfer robot farthest to the right in the plane of the drawing in Fig. 1, a downstream portion 3a of the bulk supply conveyor 3, and via said portion 3a, products that are not led to one of the branches 8 are led to a transfer station 12. The system 1 has, for each branch 8, a respective branch device 14, which is arranged, at least in an active state thereof (shown for the first and third branch), for causing products to move across from the main conveyor 6 to the respective branch 8. The branch device 14 of the middle, second branch 8 is in the passive state, wherein products 2 may pass unhindered along the branch device 14. The branch device 14 is, at least in the active state thereof, a beam-shaped element extending obliquely over the main conveyor, so that products are propelled sideways from the main conveyor 6 onto the branch conveyor. The system 1 then further comprises a branch controller 16 arranged for controlling the respective branch devices 14, i.e. moving the branch devices from the passive to the active state and vice versa, in such a way that products move across from the main conveyor 6 to the branches 8 for feeding the products 2 via the branches 8 to the transfer robots 10. The branch device described for leading a number of products from a main conveyor to a branch may also be configured in an alternative manner known by a person skilled in the art.

Where the products 2 on the main conveyor are supplied in bulk, i.e. to a great extent may be located next to and on top of each other as shown in Fig. 1, the branches 8 each have successive belt conveyor sections 19 that are drivable separately, for example such as at different speeds, as a consequence of which products 2 have already been separated from each other to some extent, i.e. may already be partly singulated, thus making them more easily accessible, i.e. easier to grip, for the transfer robots 10.

Each transfer robot 10 has a controller 22 assigned thereto, arranged for selecting, on the basis of predetermined selection criteria, a product to be transferred from products 2 on the branch 8, which are supplied with the bulk supply conveyor 3 to the transfer robot 10, and for controlling the transfer robot 10, on the basis of the selection, for the purpose of the transfer of products 2 to be transferred one by one by the transfer robot 10. In this case it is possible in operation to supply the products to the transfer robot 10 and to stop at the transfer robot 10 at the respective location, which will in the present example be for example products on the most downstream belt conveyor section 19 of the branch 8, so that the transfer robot 10 can in each case transfer a product from one or more products present at a fixed location. The transfer robot 10 may then for example in each case transfer a selected product from a group of individual, such as two to ten, products at the location of the downstream end of the branch.

Examples of the predetermined selection criteria are for example whether or not being transferable (pickable or non-pickable), whether or not being sortable (depending on the type of discharge conveyor used or the subsequent sorting conveyor), the size of the product (products that are too small and/or too large for example do not meet the criteria), the presence of possible hazardous substances in the product, which may be recognized for example by the presence of a relevant indication such as a sticker on the product. An example of a non-pickable product may be, depending of course on the product gripping device provided on the transfer robot 10, for example a tubular product or spherical product. Depending on the type of transfer robot used, for example it could be that a product that is "too small" cannot be transferred at all, or only with a disproportionately large chance of error. Such a product is not selected, so that it ends up at the transfer station, where it can be transferred efficiently manually, as described below in more detail.

For each of the transfer robots 10, the system 1 comprises a respective camera 28 for detecting products 2 on the bulk supply conveyor or at least in the example according to Fig. 1 on a branch 8 of the bulk supply conveyor 3, wherein the controller 22 is arranged for selecting a product to be transferred, using information about a product on the bulk supply conveyor 3, detected with the camera 28.

The system 1 further comprises the transfer station 12 already mentioned above, where products 2 that had not been transferred by the transfer robots 10 are transferred to the discharge conveyor 4. In this case the transfer station 12 is provided in the system 1 in such a way that products that were not led to one of the branches via the downstream portion 3a of the main conveyor 6 of the bulk supply conveyor 3 end up at the transfer station 12, as shown in Fig. 1. The transfer station 12 is arranged for transferring products there manually, i.e. by a person 24, to the discharge conveyor 4. The person 24 determines at the location of the transfer station 12 whether a product should be transferred to the discharge conveyor 4. If so, the person can transfer the product to the discharge conveyor, for which it has an infeed 46, which is located with an upstream end at the location of the transfer station 12. If not, then the person 24 may discharge the product along another path to the residual discharge system 48, such as for example by depositing the product in a collecting bin. The residual discharge system 48 may for example comprise a collecting bin or container, which is placed next to the transfer station 12 and in which products may be deposited.

The system 1 also has an auxiliary conveyor 26 arranged for conveying products 2 to the transfer station 12. The controllers 22 are arranged for controlling the branch drives 11 in such a way that products that were not transferred by the transfer robots 10 from a branch to the discharge conveyor move across from the branch conveyors 9 to the auxiliary conveyor 26. As shown in Fig. 1, this is provided in a simple manner because each branch conveyor 9 discharges onto the auxiliary conveyor 26. In this way, feed of products 2 to the transfer robots 10, and the conveying of products 2 away from the transfer robots 10 to the transfer station 12, may thus take place independently.

If gripping of a selected product 2 with the transfer robot 10 for the purpose of transferring the product is not successful, a new attempt is undertaken with the transfer robot 10 and if necessary optionally also a third attempt. If this third attempt, which could optionally be carried out at a lower speed as already described above, is also unsuccessful, during a subsequent transfer operation this product 2 is excluded from selection by the controller at least until the respective product has crossed over onto the auxiliary conveyor 26, i.e. is no longer within gripping range of the transfer robot. This makes the selecting and transfer of products that are to be transferred more efficient, since it is not attempted to transfer the same product twice, and no time is lost through repeatedly trying to transfer the product. Exclusion of the product may for example take place by excluding the position of the product from further transfer operations, until the product has been led away to the auxiliary conveyor.

In the present example the discharge conveyor 4 comprises a cross belt sorter 32 with an infeed 34 per transfer robot 10 from where products can be led to a predetermined position or separate cross belt, on the cross belt sorter 32. In this case the transfer robot 10 is arranged for transferring products 2 from the branch conveyor 9 of the bulk supply conveyor 3 to the associated infeed 34 of the discharge conveyor 4. A further camera 36 is provided per infeed 34 for detecting a product 2 on the discharge conveyor 4, more specifically on the infeed 34 thereof, at the location of the transfer robot 10. For each infeed 34, the system has a removing device 40 for removing a product if necessary from the infeed 34 at the location of the transfer robot 10. The removing device 40 for removing a product from the infeed 34 at the location of the transfer robot relates to an upstream conveyor belt section of the infeed 34 and thus in fact forms part of the infeed 34.

For each infeed 34, the system 1 has a remover-controller 38 arranged to control said conveyor belt section of the infeed 34 in such a way that for the purpose of removing a product from the infeed 34, the conveyor belt section is driven backwards so that a product from the infeed 34 ends up back on the auxiliary conveyor 26 and thus goes to the transfer station 12. In the present example this takes place if, using the further camera 36, it is determined that the product forms part of several products that had been transferred by the transfer robot 10 unintentionally in a single transfer operation. As an example, we may consider the unintentional transfer of two postal envelopes that were lying partly on one another and so were gripped by the transfer robot unintentionally at the same time, more specifically by a gripping tool of the transfer robot, for example by suction cups of such a gripping tool of the transfer robot. These two products are then both removed from the infeed 34 in the manner described with the removing device onto the auxiliary conveyor 26 and are led to the transfer station. Said removal of both products is considerably more efficient than for example attempting to grip and remove one of the products again with the transfer robot. The products removed may then be transferred manually to the discharge conveyor efficiently at the transfer station.

The discharge conveyor 4 also has a recording device with a respective readout device 42 at the location of each of the infeeds 34 arranged for optical readout of an optically readable code from the bottom on a product located above the readout device 42 on the infeed 34. Such a code may for example be a barcode or QR code. The recording device also has one further readout device 44 that is provided downstream of the infeeds 34 along the discharge conveyor 4 for readout of one or more sides of the product facing upwards or sideways. The further readout device 44 is installed as a portal across the conveyor 4.

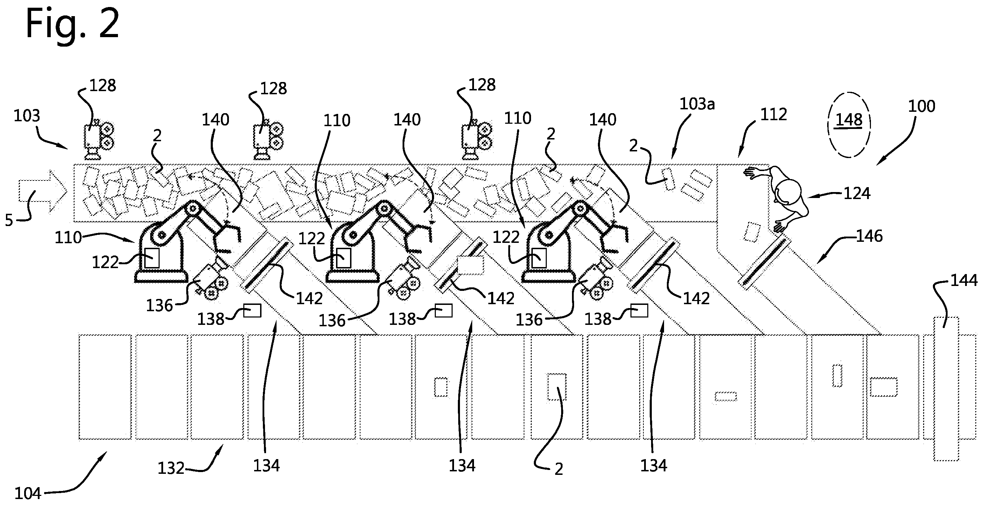

Fig. 2 shows a system 100 as a further example of a system according to the invention for the processing of products 2. The system 100 has similarities with the system 1. Identical or comparable components are consequently indicated with the same reference numbers as in Fig. 1, 100 being added in each case. Fig. 2 shows a large amount of products 2, which are parcels. The system 100 has, just like system 1, a bulk supply conveyor 103 for supplying the products 2 and a discharge conveyor 104 for the discharging of products 2. The arrow 5 indicates the transport direction of the stream of products 2 supplied with the bulk supply conveyor 103. The bulk supply conveyor 103 is a belt conveyor, whereas the discharge conveyor comprises a cross belt sorter 132. The discharge conveyor 104 including its infeeds 134, cameras 136, readout devices 142 and 144 are identical to the corresponding components of system 1.

Unlike in system 1, the bulk supply conveyor 103 does not have a main conveyor with three branches. Products 2 can be transferred with the three transfer robots 110 that are provided successively in the transport direction 5 directly from a stream of products on the bulk supply conveyor 103, i.e. on the belt conveyor, to a respective infeed 134 of the discharge conveyor 104. The stream of products thus goes past all transfer robots 110, wherein successive transfer robots 110 in each case transfer products 2 from the stream of products to the discharge conveyor 104.

Fig. 2 shows, downstream of the most downstream transfer robot 110, being the robot farthest to the right in the plane of the drawing in Fig. 2, a portion 103a of the bulk supply conveyor over which products that were not transferred by one of the transfer robots 110 are led to a transfer station 112.

Each transfer robot 110 has a controller 122 assigned thereto, arranged for selecting, on the basis of predetermined selection criteria, a product to be transferred from products 2 that are fed with the bulk supply conveyor 103 to the transfer robot 110, and for controlling the transfer robot 110, on the basis of the selection, for the purpose of the transfer by the transfer robot 110 of products 2 to be transferred from the stream of products. Examples of the predetermined selection criteria have already been described above in the context of system 1.

For each of the transfer robots 110, the system 100 comprises a respective camera 128 for detecting products 2 on the bulk supply conveyor 103 wherein the controller 122 is arranged for selecting a product to be transferred, using information detected with the camera 128 about a product on the bulk supply conveyor 103.

The transfer station 112 is arranged for products 2 that were not transferred by the transfer robots 110 to be transferred to the discharge conveyor 104. The transfer station 112 is, just like transfer station 12, arranged for transferring products manually, i.e. by a person 124, to the discharge conveyor 104, wherein the person 124 determines whether a product should be transferred to the discharge conveyor 104, which for that purpose has a further infeed 146, which is located with an upstream end at the location of the transfer station 112. If not, the person 124 may discharge the product along another path to the residual discharge system 148.

If gripping of a selected product 2 with the transfer robot 110 for the purpose of transferring the product is not successful, in one embodiment this product 2 may be excluded from selection by the controllers 122 of transfer robots provided downstream. This exclusion may take place efficiently by communicating, with the controller 122 of the respective transfer robot 110, to controllers 122 of downstream transfer robots 110 about a position on the bulk supply conveyor where the product is located. In this case, after a failed transfer attempt, as explained for system 1, it is also possible to undertake a new transfer attempt with the transfer robot 110 and if necessary, and possibly taking into account the speed of movement of products on the bulk supply conveyor, optionally also a third attempt.

Per infeed 134 of the discharge conveyor 104, a detection system is formed by a further camera 136 provided for detecting a product 2. The removing devices 140 for removing products from the infeeds 134 at the location of the transfer robot 110 are also formed in this example by upstream conveyor belt sections of the infeeds 134. The remover-controller 138 is also arranged here for controlling said conveyor belt sections of the infeeds 134 in such a way that for the purpose of removing a product from an infeed 134, the conveyor belt section of this infeed is driven backwards. This also takes place in the present example if it is determined using the further camera 136 that the product forms part of several products that were transferred unintentionally in a single transfer operation by the transfer robot 110. These several products are then all removed from the infeed 134. Unlike in system 1, as shown in Fig. 2, a product then ends up again on the bulk supply conveyor 103 and follows this path to the transfer station 112.

The discharge conveyor 104 also has a recording device with a respective readout device 142 at the location of each of the infeeds 134, the same as the readout devices 42 described above. The recording device also has one further readout device 144 installed as a portal across the conveyor 104, which is provided along the discharge conveyor 104 downstream of the infeeds 134 for readout of one or more sides of the product facing upwards or sideways.

In an alternative embodiment, which forms a variant of the embodiment of the system according to Fig. 1, the transfer robots 10 are of a type that is arranged to take products 2 from the branch conveyor 9 and then throw them onto the associated removing device 40 so that the movement that the transfer robots 10 themselves must make for transferring products is less than the movement that the products themselves make during transfer. In this way, the transfer robots 10 can transfer products at high capacity. Any products that for example on the basis of their weight, shape, dimensions and/or volume are deemed unsuitable for being thrown, may for example not be taken up by the transfer robots 10, and are transferred to the auxiliary conveyor 26. Alternatively the respective transfer robots 10 besides being suitable for throwing products onto an associated removing device 40 may also be suitable for placing products on the associated removing device 40. The transfer robots 10 may be installed at the upstream ends of the associated infeed 34, more specifically next to the removing device 40 thereof, as shown in Fig. 1 but alternatively could also be installed at the respective downstream ends of the associated branch conveyors 9, more specifically next to the most downstream belt conveyor sections 19 thereof.

## Claims

1. System (1; 100) for the processing of products, comprising
- a bulk supply conveyor (3; 103) for supplying products (2);
- a discharge conveyor (4; 104) for the discharging of products (2);
- a transfer robot (10; 110) arranged for transferring products from the bulk supply conveyor (3) to the discharge conveyor (4);
- a controller arranged for selecting, on the basis of predetermined selection criteria, a product that is to be transferred, from products that are fed with the bulk supply conveyor (3) to the transfer robot (10), and for controlling the transfer robot (10), on the basis of the selection, for the purpose of transferring, by the transfer robot (10), of the product that is to be transferred;
- a transfer station (12; 112) for the manual transfer there, to the discharge conveyor (4), of products that have not been transferred by the transfer robot (10),
wherein the transfer station (12) is provided in the system in such a way that products that have not been transferred by the transfer robot (10) end up at the transfer station (12),
wherein the system comprises several such transfer robots (10), which are provided successively, seen in a transport direction (5) of the bulk supply conveyor (3),
**characterized in that** the bulk supply conveyor (3) comprises a main conveyor (6) with several branches (8), wherein each branch (8) ends up at one of the several transfer robots (10),
wherein the system (1) comprises a respective branch device (14) associated with each branch (8), which is arranged for causing products (2) to move across from the main conveyor (6) to the respective branch (8),
the system further comprising a branch controller (16) arranged for controlling the respective branch devices (14) in such a way that products move across from the main conveyor (6) to the branches (8) for supplying said products to the transfer robots (10) via the branches (8).

2. System according to claim 1, wherein each of the several transfer robots (10) has an associated said controller (22; 122).

3. System according to claim 1 or 2, wherein the several transfer robots (10) are installed along the bulk supply conveyor (3) in such a way that these products are transferred from a stream of products on the bulk supply conveyor (3), wherein the bulk supply conveyor (3) ends up at the transfer station (12) downstream of the several transfer robots (10).

4. System according to one of the preceding claims, wherein the system has a separate transfer robot (10) for each of the several branches (8) and/or wherein the main conveyor (6) discharges at the transfer station (12) downstream of the branches (8).

5. System according to one of the preceding claims, wherein each of the several branches (8) comprises a branch conveyor (9) with a branch drive (11) for driving the branch conveyor (9) in such a way that products are transported from the main conveyor (6) to the transfer robot (10),
preferably wherein the controller is also arranged in each case for stopping, during a transfer operation by the transfer robot (10), at least one portion of the branch conveyor (9) situated at the location of the transfer robot (10).

6. System according to claim 5, further comprising:
- an auxiliary conveyor (26) arranged for conveying products to the transfer station (12),
wherein the controller is also arranged for controlling the branch drive (11) in such a way that products that have not been transferred by the transfer robot (10) move across from the branch conveyor (9) to the auxiliary conveyor (26).

7. System according to one of the preceding claims, comprising a camera (28; 128) for detecting products on the bulk supply conveyor (3),
wherein the controller is arranged for selecting a product to be transferred, using information about a product on the bulk supply conveyor (3) detected with the camera (28).

8. System according to one of the preceding claims, further comprising:
- a further camera (36; 136) for detecting a product on the discharge conveyor (4) at the location of the transfer robot (10);
- a removing device (40; 140) for removing a product from the discharge conveyor (4) at the location of the transfer robot (10);
the system comprising a remover-controller (38; 138) arranged to drive the removing device (40) in such a way that a product on the discharge conveyor (4) is removed from the discharge conveyor (4) at the location of the transfer robot (10) if it is determined with the further camera (36) that the product does not satisfy predetermined criteria relating to an orientation of the product and/or to the position of the product on the discharge conveyor (4) and/or that the product forms part of several products that are transferred by the transfer robot (10) unintentionally in a single transfer operation,
wherein preferably the remover-controller (38) is arranged to drive the removing device (40) in such a way that a product on the discharge conveyor (4) at the location of the transfer robot (10) goes back across from the discharge conveyor (4) to the bulk supply conveyor (3).

9. System according to claim 8 and according to claim 6 or a claim dependent thereon, wherein the remover-controller (38) is arranged to drive the removing device (40) in such a way that a product on the discharge conveyor (4) at the location of the transfer robot (10) goes across from the discharge conveyor (4) to the auxiliary conveyor (26).

10. System according to one of the preceding claims, wherein the discharge conveyor (4) comprises an infeed (34; 134) wherein the transfer robot (10) is arranged for transferring products from the bulk supply conveyor (3) to the infeed (34) of the discharge conveyor (4).

11. System according to claim 10, wherein the discharge conveyor (4) further comprises a recording device with a readout device (42; 142) at the location of the infeed (34) arranged for recording information from a product on the infeed (34), wherein the readout device (42) is preferably arranged for optical readout of an optically readable code on the product, wherein preferably the readout device (42) is arranged for readout from the bottom upwards of an underside of a product on the infeed, and wherein the recording device also comprises a further readout device (44; 144) that is provided downstream of the infeed (34) along the discharge conveyor (4) for readout of one or more sides of the product facing upwards or sideways, wherein further preferably for each of the several transfer robots (10) the discharge conveyor (4) has a separate such infeed (34), wherein each infeed (34) has a readout device (42) of this kind and wherein one such further readout device (44) is provided downstream of said infeeds (34) along the discharge conveyor (4).

12. System according to one of the preceding claims, wherein at least one of the several transfer robots (10), preferably each transfer robot (10), is arranged for being able to throw products onto a discharge conveyor (4), preferably onto an infeed (34) thereof.

13. Method for processing products, the method using a system (1; 100) according to one of claims 1-12 and comprising
a) the supplying of products (2; 102) with a bulk supply conveyor (3; 103);
b) in each case, transferring a product with a transfer robot (10; 110) from the bulk supply conveyor (3) to a discharge conveyor (4), for which:
b1) with a controller, on the basis of predetermined selection criteria, a product to be transferred is selected from products that are fed with the bulk supply conveyor (3) to the transfer robot (10), and
b2) with the controller, the transfer robot (10) is controlled in such a way that the transfer robot (10) transfers the product that is to be transferred, from the bulk supply conveyor (3) to the discharge conveyor (4) preferably by throwing the product to be transferred onto the discharge conveyor (4);
c) the conveying, to a transfer station (12; 112), of products supplied with the bulk supply conveyor (3), which have not been transferred according to step b); and
d) manual processing, at the transfer station (12), of the products that had not been transferred, wherein:
d1) it is determined whether a product should be transferred to the discharge conveyor (4), and
d1a) if so, the product is transferred to the discharge conveyor (4), and
d1b) if not, the product is led away from the transfer station (12) to a residual discharge system (48; 148).

14. Method according to claim 13, wherein if during step b2), gripping of the product with the transfer robot (10) for the purpose of transferring the product is not successful, step b2) is repeated at least once and at most three times,
and if during said repetition of step b2), gripping of the product with the transfer robot (10) for the purpose of transferring the product is also unsuccessful, during a subsequent step b1) this product is excluded from selection by the controller at least up to and including execution of step c).

15. Method according to one of claims 13-14, wherein step b) is carried out for only a proportion of the products, wherein the remainder of the products are supplied directly to the transfer station (12), preferably wherein said proportion of the products for which step b) is carried out is between 70 and 95 percent of the products supplied, more preferably 80 to 90 percent.

## Patentansprüche

1. System (1; 100) zum Verarbeiten von Produkten, Folgendes umfassend
- einen Schüttgutzufuhrförderer (3; 103) zum Zuführen von Produkten (2);
- einen Entladeförderer (4; 104) zum Entladen von Produkten (2);
- einen Übergaberoboter (10; 110), der zum Übergeben von Produkten vom Schüttgutzufuhrförderer (3) zum Entladeförderer (4) angeordnet ist;
- eine Steuerung, die dazu angeordnet ist, auf der Grundlage vorbestimmter Auswahlkriterien ein zu übergebendes Produkt aus Produkten auszuwählen, die mit dem Schüttgutzufuhrförderer (3) dem Übergaberoboter (10) zugeführt werden, und den Übergaberoboter (10) auf Grundlage der Auswahl zu steuern, um das zu übergebende Produkt durch den Übergaberoboter (10) zu übergeben;
- eine Übergabestation (12; 112) für die manuelle Übergabe von Erzeugnissen, die nicht vom Übergaberoboter (10) übergeben wurden, an den Entladeförderer (4);
wobei die Übergabestation (12) in dem System derart vorgesehen ist, dass Produkte, die nicht durch den Übergaberoboter (10) übergeben wurden, an der Übergabestation (12) enden,
wobei das System mehrere derartige Übergaberoboter (10) umfasst, die in einer Transportrichtung (5) des Schüttgutzufuhrförderers (3) gesehen nacheinander vorgesehen sind,
**dadurch gekennzeichnet, dass** der Schüttgutzufuhrförderer (3) einen Hauptförderer (6) mit mehreren Abzweigungen (8) umfasst, wobei jede Abzweigung (8) an einem der mehreren Übergaberoboter (10) endet,
wobei das System (1) eine jeweilige Abzweigungsvorrichtung (14) umfasst, die jeder Abzweigung (8) zugeordnet ist, die dazu ausgelegt ist, zu bewirken, dass sich Produkte (2) von dem Hauptförderer (6) zur jeweiligen Abzweigung (8) bewegen,
wobei das System ferner eine Abzweigungssteuerung (16) umfasst, die dazu angeordnet ist, die jeweiligen Abzweigungsvorrichtungen (14) derart zu steuern, dass sich Produkte von dem Hauptförderer (6) zu den Abzweigungen (8) bewegen, um die Produkte über die Abzweigungen (8) den Übergaberobotern (10) zuzuführen.

2. System nach Anspruch 1, wobei jedem der mehreren Übergaberoboter (10) eine Steuerung (22; 122) zugeordnet ist.

3. System nach Anspruch 1 oder 2, wobei die mehreren Übergaberoboter (10) entlang des Schüttgutzufuhrförderers (3) derart installiert sind, dass diese Produkte aus einem Produktstrom auf dem Schüttgutzufuhrförderer (3) übergeben werden, wobei der Schüttgutzufuhrförderer (3) an der Übergabestation (12) hinter den mehreren Übergaberobotern (10) endet.

4. System nach einem der vorhergehenden Ansprüche, wobei das System für jede der mehreren Abzweigungen (8) einen separaten Übergaberoboter (10) aufweist und/oder wobei sich der Hauptförderer (6) an der Übergabestation (12) hinter den Abzweigungen (8) entlädt.

5. System nach einem der vorhergehenden Ansprüche, wobei jede der mehreren Abzweigungen (8) einen Abzweigungsförderer (9) mit einem Abzweigungsantrieb (11) zum Antreiben des Abzweigungsförderers (9) derart umfasst, dass Produkte vom Hauptförderer (6) zum Übergaberoboter (10) transportiert werden,
vorzugsweise wobei die Steuerung außerdem jeweils zum Anhalten mindestens eines am Standort des Übergaberoboters (10) befindlichen Abschnitts des Abzweigungsförderers (9) während eines Übergabevorgangs durch den Übergaberoboter (10) angeordnet ist.

6. System nach Anspruch 5, ferner Folgendes umfassend:
- einen Hilfsförderer (26), der zum Befördern von Produkten zur Übergabestation (12) angeordnet ist,
wobei die Steuerung außerdem dazu angeordnet ist, den Abzweigungsantrieb (11) derart zu steuern, dass sich Produkte, die nicht vom Übergaberoboter (10) übergeben wurden, vom Abzweigungsförderer (9) zum Hilfsförderer (26) bewegen.

7. System nach einem der vorhergehenden Ansprüche, umfassend eine Kamera (28; 128) zum Erfassen von Produkten auf dem Schüttgutzufuhrförderer (3),
wobei die Steuerung zum Auswählen eines zu übergebenden Produkts unter Verwendung von Informationen über ein mit der Kamera (28) erfasstes Produkt auf dem Schüttgutzufuhrförderer (3) angeordnet ist.

8. System nach einem der vorhergehenden Ansprüche, ferner Folgendes umfassend:
- eine weitere Kamera (36; 136) zum Erfassen eines Produkts auf dem Entladeförderer (4) am Standort des Übergaberoboters (10);
- eine Entnahmevorrichtung (40; 140) zum Entnehmen eines Produkts vom Entladeförderer (4) am Standort des Übergaberoboters (10);
wobei das System eine Entnahmesteuerung (38; 138) umfasst, die dazu angeordnet ist, die Entnahmevorrichtung (40) derart anzutreiben, dass ein Produkt auf dem Entladeförderer (4) am Standort des Übergaberoboters (10) vom Entladeförderer (4) entnommen wird, wenn mit der weiteren Kamera (36) festgestellt wird, dass das Produkt vorgegebene Kriterien bezüglich einer Ausrichtung des Produkts und/oder der Position des Produkts auf dem Entladeförderer (4) nicht erfüllt und/oder dass das Produkt Teil mehrerer Produkte ist, die vom Übergaberoboter (10) versehentlich in einem einzigen Übergabevorgang übergeben wurden,
wobei vorzugsweise die Entnahmesteuerung (38) dazu angeordnet ist, die Entnahmevorrichtung (40) derart anzutreiben, dass ein Produkt auf dem Entladeförderer (4) am Standort des Übergaberoboters (10) vom Entladeförderer (4) zum Schüttgutzufuhrförderer (3) zurückgeht.

9. System nach Anspruch 8 und nach Anspruch 6 oder einem davon abhängigen Anspruch, wobei die Entnahmesteuerung (38) dazu angeordnet ist, die Entnahmevorrichtung (40) derart anzutreiben, dass ein Produkt auf dem Entladeförderer (4) am Standort des Übergaberoboters (10) vom Entladeförderer (4) zum Hilfsförderer (26) übergeht.

10. System nach einem der vorhergehenden Ansprüche, wobei der Entladeförderer (4) eine Zuführung (34; 134) umfasst, wobei der Übergaberoboter (10) zum Übergeben von Produkten vom Schüttgutzufuhrförderer (3) zur Zuführung (34) des Entladeförderers (4) angeordnet ist.

11. System nach Anspruch 10, wobei der Entladeförderer (4) ferner eine Aufzeichnungsvorrichtung mit einer Auslesevorrichtung (42; 142) am Standort der Zuführung (34) umfasst, die zum Aufzeichnen von Informationen von einem Produkt an der Zuführung (34) angeordnet ist, wobei die Ausleseeinrichtung (42) vorzugsweise zum optischen Auslesen eines optisch lesbaren Codes auf dem Produkt angeordnet ist, wobei vorzugsweise die Ausleseeinrichtung (42) zum Auslesen von unten nach oben einer Unterseite eines Produkts an der Zuführung angeordnet ist und wobei die Aufzeichnungsvorrichtung ferner eine weitere Auslesevorrichtung (44; 144) umfasst, die hinter der Zuführung (34) entlang des Entladeförderers (4) zum Auslesen einer oder mehrerer Seiten des aufwärts oder seitlich gewandten Produkts vorgesehen ist, wobei weiter vorzugsweise für jeden der mehreren Übergaberoboter (10) der Entladeförderer (4) eine separate derartige Zuführung (34) aufweist, wobei jede Zuführung (34) eine derartige Auslesevorrichtung (42) aufweist und wobei eine solche weitere Auslesevorrichtung (44) entlang des Entladeförderers (4) hinter den Zuführungen (34) vorgesehen ist.

12. System nach einem der vorhergehenden Ansprüche, wobei mindestens einer der mehreren Übergaberoboter (10), vorzugsweise jeder Übergaberoboter (10), dazu angeordnet ist, Produkte auf einen Entladeförderer (4), vorzugsweise auf eine Zuführung (34) davon, werfen zu können.

13. Verfahren zum Verarbeiten von Produkten, wobei das Verfahren ein System (1; 100) nach einem der Ansprüche 1-12 verwendet und Folgendes umfasst
a) Zuführen von Produkten (2; 102) mit einem Schüttgutzufuhrförderer (3; 103);
b) jeweils Übergeben eines Produkts mit einem Übergaberoboter (10; 110) vom Schüttgutzufuhrförderer (3) zu einem Entladeförderer (4), wobei:
b1) mit einer Steuerung anhand vorgegebener Auswahlkriterien ein zu übergebendes Produkt aus Produkten ausgewählt wird, die mit dem Schüttgutzufuhrförderer (3) dem Übergaberoboter (10) zugeführt werden, und
b2) mit der Steuerung der Übergaberoboter (10) derart gesteuert wird, dass der Übergaberoboter (10) das zu übergebende Produkt vom Schüttgutzufuhrförderer (3) zum Entladeförderer (4) übergibt, vorzugsweise indem das zu übergebende Produkt auf den Entladeförderer (4) geworfen wird;
c) Fördern von mit dem Schüttgutzufuhrförderer (3) zugeführten Produkten, die nicht gemäß Schritt b) übergeben wurden, zu einer Übergabestation (12; 112) und
d) manuelles Bearbeiten der nicht übergebenen Produkte an der Übergabestation (12), wobei:
d1) festgestellt wird, ob ein Produkt an den Entladeförderer (4) übergeben werden soll, und
d1a) wenn ja, das Produkt an den Entladeförderer (4) übergeben wird, und
d1b) wenn nein, das Produkt von der Übergabestation (12) zu einem Restentladesystem (48; 148) abgeführt wird.

14. Verfahren nach Anspruch 13, wobei, falls während Schritt b2) das Greifen des Produkts mit dem Übergaberoboter (10) zum Zweck des Übergebens des Produkts nicht erfolgreich ist, Schritt b2) mindestens einmal und höchstens dreimal wiederholt wird
und falls bei dieser Wiederholung des Schrittes b2) das Greifen des Produkts mit dem Übergaberoboter 10 zum Übergeben des Produkts ebenfalls nicht erfolgreich ist, dieses Produkt während eines nachfolgenden Schrittes b1) zumindest bis einschließlich der Ausführung des Schrittes c) von der Auswahl durch die Steuerung ausgeschlossen wird.

15. Verfahren nach einem der Ansprüche 13-14, wobei Schritt b) nur für einen Teil der Produkte durchgeführt wird, wobei der Rest der Produkte direkt der Übergabestation (12) zugeführt wird, wobei vorzugsweise der Anteil der Produkte, für die Schritt b) durchgeführt wird, zwischen 70 und 95 Prozent der zugeführten Produkte, vorzugsweise 80 bis 90 Prozent, beträgt.

## Revendications

1. Système (1 ; 100) pour le traitement de produits, comprenant
- un transporteur d'approvisionnement en vrac (3 ; 103) pour l'approvisionnement de produits (2) ;
- un transporteur d'évacuation (4 ; 104) pour l'évacuation de produits (2) ;
- un robot de transfert (10 ; 110) agencé pour transférer les produits du transporteur d'approvisionnement en vrac (3) vers le transporteur d'évacuation (4) ;
- un dispositif de commande agencé pour sélectionner, sur la base de critères de sélection prédéterminés, un produit qui doit être transféré parmi les produits qui sont acheminés par le transporteur d'approvisionnement en vrac (3) vers le robot de transfert (10), et pour commander le robot de transfert (10), sur la base de la sélection, aux fins du transfert, par le robot de transfert (10), du produit qui doit être transféré ;
- une station de transfert (12 ; 112) pour le transfert manuel, vers le transporteur d'évacuation (4), des produits qui n'ont pas été transférés par le robot de transfert (10),
dans lequel la station de transfert (12) est prévue dans le système de telle manière que les produits qui n'ont pas été transférés par le robot de transfert (10) aboutissent à la station de transfert (12),
dans lequel le système comprend plusieurs robots de transfert (10) de ce type, qui sont prévus successivement, vus dans une direction de transport (5) du transporteur d'approvisionnement en vrac (3),
**caractérisé en ce que** le transporteur d'approvisionnement en vrac (3) comprend un transporteur principal (6) à plusieurs ramifications (8), dans lequel chaque ramification (8) aboutit à l'un des plusieurs robots de transfert (10),
dans lequel le système (1) comprend un dispositif de ramification respectif (14) associé à chaque ramification (8), qui est agencé pour amener les produits (2) à se déplacer du transporteur principal (6) vers la ramification respective (8),
le système comprenant en outre un dispositif de commande de ramification (16) agencé pour commander les dispositifs de ramification respectifs (14) de telle manière que les produits se déplacent du transporteur principal (6) vers les ramifications (8) afin d'approvisionner lesdits robots de transfert (10) avec lesdits produits par l'intermédiaire des ramifications (8).

2. Système selon la revendication 1, dans lequel chacun des plusieurs robots de transfert (10) a un dit dispositif de commande (22 ; 122) associé.

3. Système selon la revendication 1 ou 2, dans lequel les plusieurs robots de transfert (10) sont installés le long du transporteur d'approvisionnement en vrac (3) de telle manière que ces produits sont transférés à partir d'un flux de produits sur le transporteur d'approvisionnement en vrac (3), dans lequel le transporteur d'approvisionnement en vrac (3) aboutit à la station de transfert (12) en aval des plusieurs robots de transfert (10).

4. Système selon l'une des revendications précédentes, dans lequel le système a un robot de transfert (10) distinct pour chacune des plusieurs ramifications (8) et/ou dans lequel le transporteur principal (6) évacue au niveau de la station de transfert (12) en aval des ramifications (8).

5. Système selon l'une des revendications précédentes, dans lequel chacune des plusieurs ramifications (8) comprend un transporteur de ramification (9) avec un entraînement de ramification (11) pour entraîner le transporteur de ramification (9) de telle manière que les produits sont transportés du transporteur principal (6) vers le robot de transfert (10),
de préférence dans lequel le dispositif de commande est également agencé dans chaque cas pour arrêter, pendant une opération de transfert par le robot de transfert (10), au moins une partie du transporteur de ramification (9) située à l'emplacement du robot de transfert (10).

6. Système selon la revendication 5, comprenant en outre :
- un transporteur auxiliaire (26) agencé pour transporter des produits vers la station de transfert (12),
dans lequel le dispositif de commande est également agencé pour commander l'entraînement de ramification (11) de telle manière que les produits qui n'ont pas été transférés par le robot de transfert (10) se déplacent du transporteur de ramification (9) vers le transporteur auxiliaire (26).

7. Système selon l'une des revendications précédentes, comprenant une caméra (28 ; 128) pour détecter les produits sur le transporteur d'approvisionnement en vrac (3),
dans lequel le dispositif de commande est agencé pour sélectionner un produit à transférer, en utilisant des informations concernant un produit sur le transporteur d'approvisionnement en vrac (3) détecté par la caméra (28).

8. Système selon l'une des revendications précédentes, comprenant en outre :
- une caméra supplémentaire (36 ; 136) pour détecter un produit sur le transporteur d'évacuation (4) à l'emplacement du robot de transfert (10) ;
- un dispositif de retrait (40 ; 140) pour retirer un produit du transporteur d'évacuation (4) à l'emplacement du robot de transfert (10) ;
le système comprenant un dispositif de commande/retrait (38 ; 138) agencé pour entraîner le dispositif de retrait (40) de telle manière qu'un produit sur le transporteur d'évacuation (4) est retiré du transporteur d'évacuation (4) à l'emplacement du robot de transfert (10) s'il est déterminé, à l'aide de la caméra supplémentaire (36), que le produit ne satisfait pas des critères prédéterminés relatifs à une orientation du produit et/ou à la position du produit sur le transporteur d'évacuation (4) et/ou que le produit fait partie de plusieurs produits qui sont transférés par le robot de transfert (10) de manière non intentionnelle en une seule opération de transfert,
dans lequel, de préférence, le dispositif de commande/retrait (38) est agencé pour entraîner le dispositif de retrait (40) de telle manière qu'un produit sur le transporteur d'évacuation (4) à l'emplacement du robot de transfert (10) retourne du transporteur d'évacuation (4) vers le transporteur d'approvisionnement en vrac (3).

9. Système selon la revendication 8 et selon la revendication 6 ou selon une revendication qui dépend de celle-ci, dans lequel le dispositif de commande/retrait (38) est agencé pour entraîner le dispositif de retrait (40) de telle manière qu'un produit sur le transporteur d'évacuation (4) à l'emplacement du robot de transfert (10) passe du transporteur d'évacuation (4) vers le transporteur auxiliaire (26).

10. Système selon l'une des revendications précédentes, dans lequel le transporteur d'évacuation (4) comprend une alimentation (34 ; 134) dans laquelle le robot de transfert (10) est agencé pour transférer les produits du transporteur d'approvisionnement en vrac (3) vers l'alimentation (34) du transporteur d'évacuation (4).

11. Système selon la revendication 10, dans lequel le transporteur d'évacuation (4) comprend en outre un dispositif d'enregistrement avec un dispositif de lecture (42 ; 142) à l'emplacement de l'alimentation (34), agencé pour enregistrer des informations provenant d'un produit sur l'alimentation (34), dans lequel le dispositif de lecture (42) est de préférence agencé pour la lecture optique d'un code lisible optiquement sur le produit, dans lequel, de préférence, le dispositif de lecture (42) est agencé pour la lecture, de bas en haut, d'une face inférieure d'un produit sur l'alimentation, et dans lequel le dispositif d'enregistrement comprend également un dispositif de lecture supplémentaire (44 ; 144) qui est prévu en aval de l'alimentation (34) le long du transporteur d'évacuation (4) pour la lecture d'une ou plusieurs faces du produit orientées vers le haut ou sur le côté, dans lequel, plus préférablement, pour chacun des plusieurs robots de transfert (10), le transporteur d'évacuation (4) a une telle alimentation (34) distincte, dans lequel chaque alimentation (34) a un dispositif de lecture (42) de ce type, et dans lequel un tel dispositif de lecture supplémentaire (44) est prévu en aval desdites alimentations (34) le long du transporteur d'évacuation (4).

12. Système selon l'une des revendications précédentes, dans lequel au moins l'un des plusieurs robots de transfert (10), de préférence chaque robot de transfert (10), est agencé pour être en mesure de projeter des produits sur un transporteur d'évacuation (4), de préférence sur une alimentation (34) de celui-ci.

13. Procédé de traitement de produits, le procédé utilisant un système (1 ; 100) selon l'une des revendications 1 à 12, et comprenant
a) l'approvisionnement de produits (2 ; 102) à l'aide d'un transporteur d'approvisionnement en vrac (3 ; 103) ;
b) dans chaque cas, le transfert d'un produit, à l'aide d'un robot de transfert (10 ; 110), du transporteur d'approvisionnement en vrac (3) vers un transporteur d'évacuation (4), pour lequel :
b1) à l'aide d'un dispositif de commande, sur la base de critères de sélection prédéterminés, un produit à transférer est sélectionné parmi les produits qui sont acheminés par le transporteur d'approvisionnement en vrac (3) vers le robot de transfert (10), et
b2) à l'aide du dispositif de commande, le robot de transfert (10) est commandé de telle manière que le robot de transfert (10) transfère le produit qui doit être transféré, du transporteur d'approvisionnement en vrac (3) vers le transporteur d'évacuation (4), de préférence en projetant le produit qui doit être transféré sur le transporteur d'évacuation (4) ;
c) le transport, vers une station de transfert (12 ; 112), des produits approvisionnés par le transporteur d'approvisionnement en vrac (3) qui n'ont pas été transférés conformément à l'étape b) ; et
d) le traitement manuel, au niveau de la station de transfert (12), des produits qui n'ont pas été transférés, dans lequel :
d1) il est déterminé si un produit devrait être transféré vers le transporteur d'évacuation (4), et
d1a) si tel est le cas, le produit est transféré vers le transporteur d'évacuation (4), et
d1b) si tel n'est pas le cas, le produit est éloigné de la station de transfert (12) vers un système d'évacuation résiduelle (48 ; 148).

14. Procédé selon la revendication 13, dans lequel, si, pendant l'étape b2), la préhension du produit par le robot de transfert (10) dans le but de transférer le produit échoue, l'étape b2) est répétée au moins une fois et au plus trois fois,
et si, pendant ladite répétition de l'étape b2), la préhension du produit par le robot de transfert (10) dans le but de transférer le produit échoue également, lors d'une étape b1) subséquente, ce produit est exclu de la sélection par le dispositif de commande au moins jusqu'à l'exécution de l'étape c), celle-ci étant incluse.

15. Procédé selon l'une des revendications 13 à 14, dans lequel l'étape b) n'est effectuée que pour une proportion des produits, dans lequel le reste des produits est approvisionné directement vers la station de transfert (12), de préférence dans lequel ladite proportion des produits pour lesquels l'étape b) est effectuée représente entre 70 et 95% des produits approvisionnés, plus préférablement entre 80 et 90%.
